(19) Europäisches Patentamt

European Patent Office

Office européen des brevets

(11) **EP 4 650 866 A1**

(12) **EUROPEAN PATENT APPLICATION**

(43) Date of publication:
**19.11.2025 Bulletin 2025/47**

(21) Application number: **24176275.6**

(22) Date of filing: **16.05.2024**

(51) International Patent Classification (IPC):
*G02F 1/35* (2006.01)     *G02F 1/365* (2006.01)

(52) Cooperative Patent Classification (CPC):
**G02F 1/3528; G02F 1/365**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ASML Netherlands B.V.**
**5500 AH Veldhoven (NL)**

(72) Inventors:
- **ABDOLVAND, Amir**
  **5500 AH Veldhoven (NL)**
- **ASSENDELFT, Joep**
  **5500 AH Veldhoven (NL)**
- **Travers, John, Colin**
  **Edinburgh, EH 14 4AS (GB)**

- **BELLI, Federico**
  **Edinburgh, EH 14 4AS (GB)**
- **ALMEGHARI, Abdelrahman**
  **Wilton, 06897 CT (US)**
- **JENKINS, Gregory, Warren**
  **Wilton, 06897 CT (US)**
- **KIM, Tae Shik**
  **Wilton, 06897 CT (US)**
- **KARPATE, Tanvi**
  **5500 AH Veldhoven (NL)**
- **HINNEN, Paul, Christiaan**
  **5500 AH Veldhoven (NL)**

(74) Representative: **ASML Netherlands B.V.**
**Corporate Intellectual Property**
**P.O. Box 324**
**5500 AH Veldhoven (NL)**

(54) **BROADBAND RADIATION SOURCE ASSEMBLY AND METHOD OF GENERATING BROADBAND RADIATION**

(57)     A broadband radiation source assembly comprising: a pump laser source configured to output a burst of radiation pulses; and an optical fiber comprising an optical medium configured to generate broadband radiation from the radiation pulses via a nonlinear process. Each burst comprises a plurality of radiation pulses. A method of generating broadband radiation is also described.

Fig. 10

**Description**

FIELD

The present invention relates to a broadband radiation source, in particular for metrology applications.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low $k_1$.

In lithographic processes, as well as other manufacturing processes, it is desirable frequently to make measurements of the structures created, e.g., for process control and verification. Various tools for making such measurements are known, including scanning electron microscopes, which are often used to measure critical dimension (CD), and specialized tools to measure overlay, the accuracy of alignment of two layers in a device. Recently, various forms of scatterometers have been developed for use in the lithographic field.

The manufacturing processes may be for example lithography, etching, deposition, chemical mechanical planarization, oxidation, ion implantation, diffusion or a combination of two or more of them.

Examples of known scatterometers often rely on provision of dedicated metrology targets. For example, a method may require a target in the form of a simple grating that is large enough that a measurement beam generates a spot that is smaller than the grating (i.e., the grating is underfilled). In so-called reconstruction methods, properties of the grating can be calculated by simulating interaction of scattered radiation with a mathematical model of the target structure. Parameters of the model are adjusted until the simulated interaction produces a diffraction pattern similar to that observed from the real target.

In addition to measurement of feature shapes by reconstruction, diffraction-based overlay can be measured using such apparatus, as described in published patent application US2006066855A1. Diffraction-based overlay metrology using dark-field imaging of the diffraction orders enables overlay measurements on smaller targets. These targets can be smaller than the illumination spot and may be surrounded by product structures on a wafer. Examples of dark field imaging metrology can be found in numerous published patent applications, such as for example US2011102753A1 and US20120044470A. Multiple gratings can be measured in one image, using a composite grating target. The known scatterometers tend to use light in the visible or near-infrared (IR) wave range, which requires the pitch of the grating to be much coarser than the actual product structures whose properties are actually of interest. Such product features may be defined using deep ultraviolet (DUV), extreme ultraviolet (EUV) or X-ray radiation having far shorter wavelengths. Unfortunately, such wavelengths are not normally available or usable for metrology.

On the other hand, the dimensions of modern product structures are so small that they cannot be imaged by optical metrology techniques. Small features include for example those formed by multiple patterning processes, and/or pitch-multiplication. Hence, targets used for high-volume metrology often use features that are much larger than the products whose overlay errors or critical dimensions are the property of interest. The measurement results are only indirectly related to the dimensions of the real product structures, and may be inaccurate because the metrology target does not suffer the same distortions under optical projection in the lithographic apparatus, and/or different processing in other steps of the manufacturing process. While scanning electron microscopy (SEM) is able to resolve these modern product structures directly, SEM is much more time consuming than optical measurements. Moreover, electrons are not able to penetrate through thick process layers, which makes them less suitable for metrology applications. Other techniques, such as measuring electrical properties using contact pads is also known, but it provides only indirect evidence of the true product structure.

By decreasing the wavelength of the radiation used during metrology it is possible to resolve smaller structures, to increase sensitivity to structural variations of the structures and/or penetrate further into the product structures. One such method of generating suitably high frequency radiation (e.g. hard X-ray, soft X-ray and/or EUV radiation) may be using a pump radiation (e.g., infrared IR radiation) to excite a generating/target medium, thereby generating an emitted radiation, optionally a high harmonic generation (HHG) comprising high frequency radiation.

Various metrology apparatuses may be subject to mechanical vibrations that may introduce errors in the measurements. On the other hand, generation of stable broadband radiation used in performing the measurements can make use of nonlinear optical processes that may be sensitive to the peak power of the pump radiation sources that are used in the broadband generation process.

SUMMARY

According to the present disclosure, the effects of mechanical vibrations may be mitigated by delivering all of the broadband radiation energy needed to generate sufficient signal for a metrology application on a time scale that is almost instantaneous relative to the period of the vibrations by compressing multiple radiation pulses into a short burst.

Described herein is a broadband radiation source assembly comprising: a pump laser source configured to output a burst of radiation pulses; and an optical fiber comprising an optical medium configured to generate broadband radiation from the radiation pulses via a nonlinear process.

Also described herein is a method of generating broadband radiation, the method comprising: providing, to an optical fiber comprising an optical medium, a burst of radiation pulses, wherein the optical medium is configured to generate broadband radiation from the radiation pulses via a nonlinear process.

Additionally described herein is a metrology tool comprising a broadband radiation source assembly as described herein.

Advantageously, providing radiation pulses in bursts of suitable duration may enable the required number of photons of the broadband radiation to be delivered to a target on a time scale that is short enough to mitigate the effects of any vibrations in a lithographic and/or metrology tool or apparatus, without requiring an increase in the overall pump laser source power, which could cause damage to the target and/or components of the tool or apparatus.

For example, each burst may comprise a plurality of radiation pulses delivered over a burst duration between 1 and 200 ns, between 1 and 150 ns, between 1 and 100 ns, or between 1 and 10 ns.

In some examples, the burst duration may be approximately 1 ns, approximately 2 ns, approximately 3 ns, approximately 4 ns, approximately 5 ns, approximately 6 ns, approximately 7 ns, approximately 8 ns, approximately 9 ns, or approximately 10 ns.

In some examples, each burst comprises 2 to 100 radiation pulses. In some examples, each burst comprises 2 to 10 radiation pulses.

In some examples, a repetition rate of the bursts of radiation pulses (i.e. the rate at which the bursts are outputted by the pump laser source, also referred to as an inter burst repetition rate) is 10 to 100 kHz.

In some examples, the broadband radiation includes visible light (e.g. radiation having a wavelength in the range 400-800 nm). In some examples, the broadband radiation includes infrared radiation. In some examples, the broadband radiation includes radiation having a wavelength of 1600 nm, or 2000 nm. In some examples, the broadband radiation includes radiation having a wavelength in the range 300-2000 nm. In some examples, the broadband radiation includes radiation having a wavelength of less than 100 nm (e.g. soft X-ray, SXR, radiation).

In some examples, the broadband radiation has a spectral power density of at least 20 mW nm$^{-1}$, at least 30 mW nm$^{-1}$, at least 40 mW nm$^{-1}$, or at least 50 mW nm$^{-1}$.

Advantageously, the spectral power densities of the broadband radiation described herein may enable burst mode operation of a broad range of metrology tools as described herein.

In some examples, the optical fiber is a solid core optical fiber. It will be understood that the optical medium in a solid core fiber may comprise the solid core of the optical fiber.

In some examples, the optical fiber is a hollow core optical fiber (e.g. a hollow core photonic crystal fiber).

The optical fiber (e.g. hollow core or solid core optical fiber) may be a microstructured optical fiber.

The optical medium may comprise a gas filling the hollow core optical fiber.

The selected optical medium (e.g. solid core, or gas or combination of gases) may depend on the desired properties of the broadband radiation to be generated, which will be at least partly determined by the nonlinear process, the properties of the radiation pulses, and/or the optical medium.

In some examples, the gas comprises a molecular gas, such as $H_2$, $D_2$, $N_2$, $CH_4$, and/or $SF_6$.

In some examples, the gas comprises an atomic gas, such as Ar, Kr, Xe, Ne, and/or He.

It will be appreciated that stable broadband radiation generation may be achieved at different pulse energies and/or spectral power densities according to the combination of the properties of the radiation pulses and the optical medium employed, and that the pulse peak power, pulse duration, burst duration, burst repetition rate, number of radiation pulses in a burst, and pump laser source wavelength may be optimised according to the optical medium and the desired broadband radiation properties.

In some examples, the pump laser source is configured such that a pulse amplitude of radiation pulses in a burst decreases (e.g. monotonically) with each pulse in a burst. That is, each burst comprises a plurality of radiation pulses, wherein successive radiation pulses within a burst have a lower amplitude than the preceding pulse.

When the pulse amplitude of the pulses in a burst decreases with each pulse in a burst, the first (leading) pulse in burst may initiate the nonlinear process (e.g. a Raman process), while subsequent pulses in the burst may require less energy to continue the nonlinear process, thus reducing the thermal load on the overall system.

It will be understood that a pump laser source as described herein may comprise one or more lasers, or sources of laser radiation. The pump laser source may also comprise one or more optical devices or other components to guide and/or shape the radiation beam(s) generated by the laser(s).

In some examples, a total energy in a burst provided to the optical medium (e.g. a gas inside an optical fiber) may be below an energy at which photoexcitation and/or photoionization of the optical medium occurs.

Photoexcitation and/or photoionization of the optical medium may lead to instability of the generated broadband radiation, as described herein. Therefore, by keeping the total energy delivered to the optical medium in a burst below the level at which photoexcitation and/or photoionization occurs, a more stable source of broadband radiation may be achieved.

In some examples, the pump laser source may be configured to operate in two operational modes: a first operational mode in which the pump laser source is configured to output radiation pulses at a fixed repetition rate and a given pulse energy (e.g. a single pulse mode, in which the pulses are not provided in bursts); and a second operational mode in which the pump laser source is configured to output a burst of radiation pulses. A burst duration in the second operational mode may be shorter than a time interval between consecutive pulses in the first operational mode, for example by 50% or less.

An optical fiber, optical crystal, or waveguide as described herein may comprise, for example, yttrium aluminium garnet (YAG), potassium gadolinium tungstate (KGW), and/or sapphire.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 is a schematic cross sectional view of a hollow core optical fiber that may form part of a radiation source assembly according to an embodiment in a transverse plane (i.e. perpendicular to an axis of the optical fiber);
- Figure 5 depicts a schematic representation of a radiation source assembly according to an embodiment for providing broadband output radiation;
- Figures 6(a) and 6(b) schematically depict the transverse cross-sections of examples of hollow core photonic crystal fiber (HC-PCF) designs for supercontinuum generation;
- Figures 7(a) and 7(b) schematically illustrate the effects of random vibrations on the interference fringes in a holography measurement;
- Figures 8(a) and 8(b) schematically illustrate a comparison between a sequence of pulses generated by a standard pulsed radiation source, and a burst of radiation pulses according to the present disclosure;
- Figures 9(a) and 9(b) schematically illustrate a comparison of the times scales of the pulse schemes illustrated in Figures 8(a) and 8(b), respectively, relative to the vibrations;
- Figure 10 schematically illustrates an example of a broadband radiation source assembly according to the present disclosure;
- Figure 11 schematically illustrates an example of a method for generating broadband radiation according to the present disclosure;
- Figure 12 schematically illustrates an example in which a pulse amplitude of radiation pulses in a burst decreases with each pulse within a burst according to the present disclosure; and

- Figure 13 schematically illustrates a threshold radiation burst energy above which broadband radiation generation may be unstable.

DETAILED DESCRIPTION

In the present document, the terms "radiation" and "beam" are used to encompass all types of electromagnetic radiation, including visible light (e.g. radiation having a wavelength in the range of about 400-800 nm), infrared radiation (including radiation having a wavelength in the range of about 1600-2000 nm), ultraviolet radiation (e.g. with a wavelength of 365, 248, 193, 157 or 126 nm), EUV (extreme ultra-violet radiation, e.g. having a wavelength in the range of about 5-100 nm), and X-ray radiation, including soft X-ray radiation (SXR), having a wavelength in the range of about 0.1-5 nm. The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

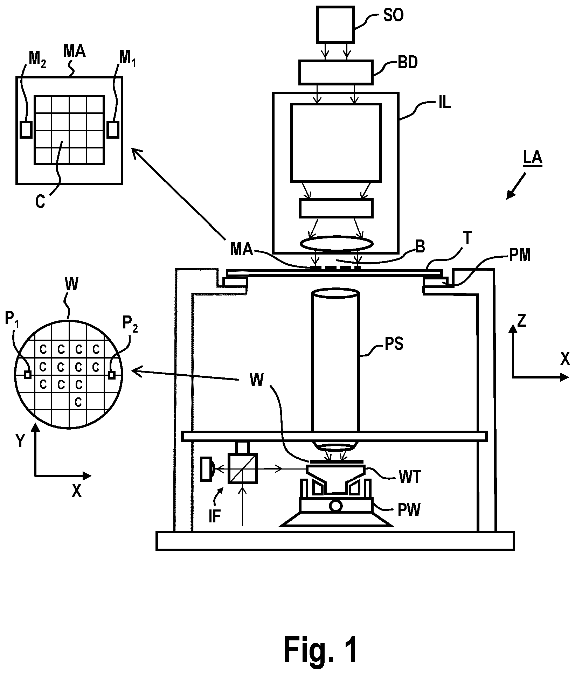

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

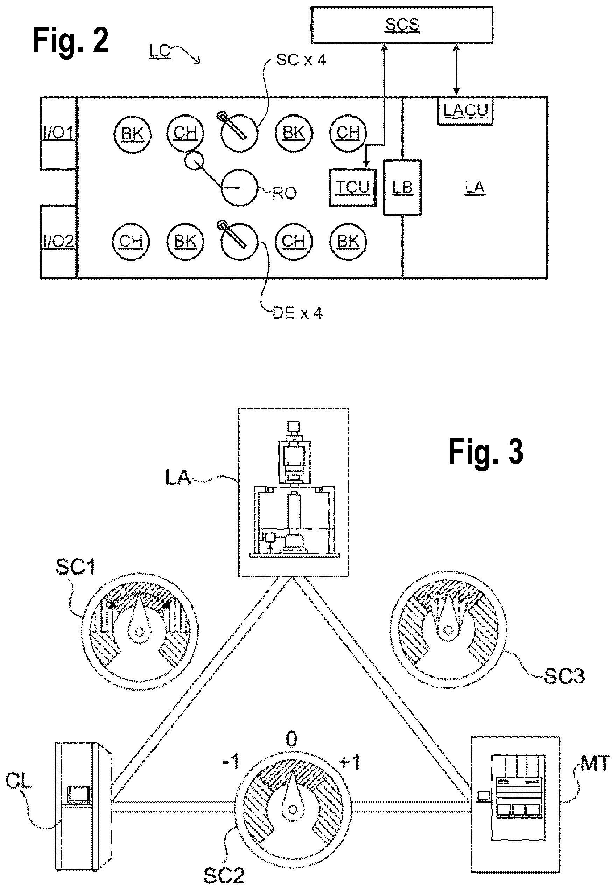

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source assembly may be a supercontinuum source.

High quality broadband radiation, for example supercontinuum radiation, may be difficult to generate. One method for generating broadband radiation may be to broaden high-power narrow band or single frequency input radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber. (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

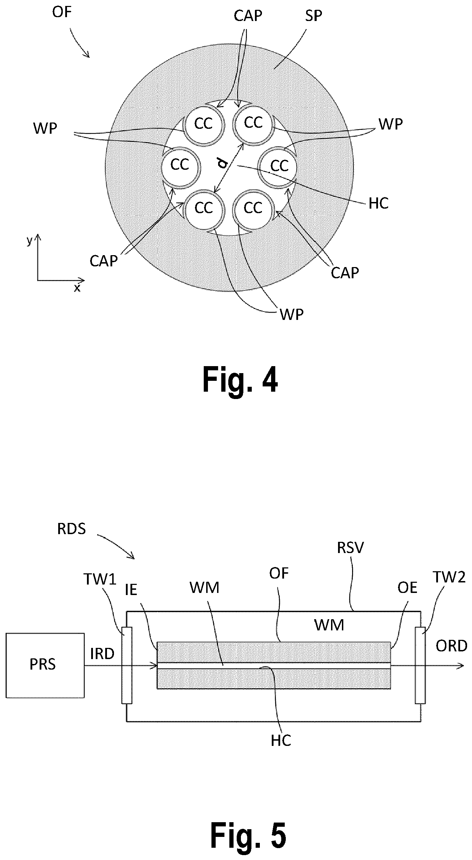

In some implementations, as discussed further below with reference to Figure 5, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source assembly. Radiation input to the fiber may be electromagnetic radiation, for example radiation in one or more of the infrared, visible, UV, and extreme UV spectra. The output radiation may consist of or comprise broadband radiation, which may be referred to herein as white light. The output radiation may

Some embodiments relate to a new design of such a broadband radiation source assembly comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

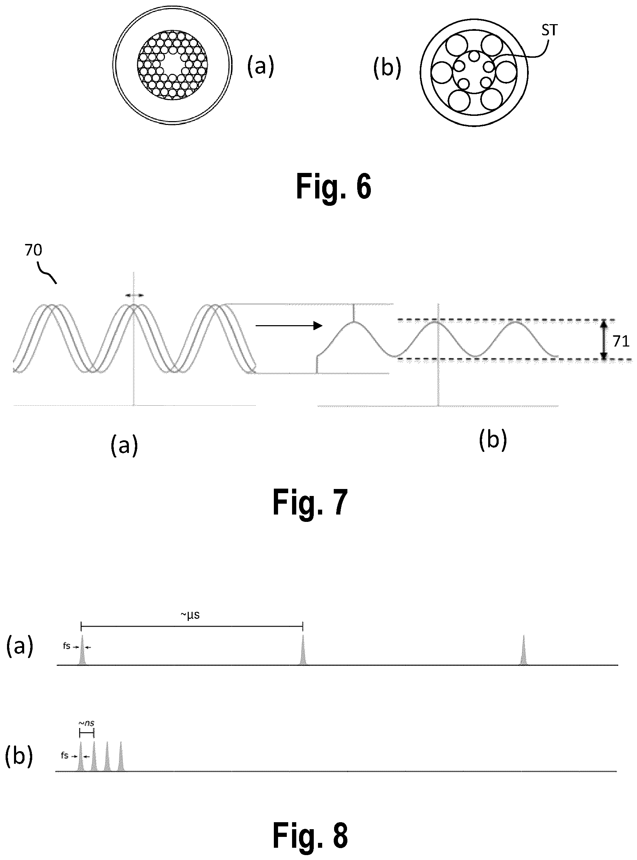

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 6(a) shows a Kagome fiber, comprising a Kagome lattice structure.

An example of an optical fiber for use in the radiation source assembly is now described with reference to Figure 4, which is a schematic cross sectional view of the optical fiber OF in a transverse plane. Further embodiments similar to the practical example of the fiber of Figure 4 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 4 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core COR; a cladding portion surrounding the hollow core COR; and a support portion SP surrounding and supporting the cladding portion. The optical fiber OF may be considered to comprise a body (comprising the cladding portion and the support portion SP) having a hollow core COR. The cladding portion comprises a plurality of anti-resonance elements for guiding radiation through the hollow core COR. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally supressed. In some embodiments, the capillary wall portion WP may have a thickness between 0.01 - 10.0 $\mu$m.

It will be appreciated that, as used herein, the term cladding portion is intended to mean a portion of the optical fiber OF for guiding radiation propagating through the optical fiber OF (i.e. the capillaries CAP which confine said radiation within the hollow core COR). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core COR. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 $\mu$m. The diameter d of the hollow core HC may affect the mode field diameter, impact loss, dispersion, modal plurality, and non-linearity properties of the hollow core optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figure 4 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 6(b) shows a modified embodiment of the above discussed HC-PCFs with a single ring of tubular capillaries. In the example of Figure 6(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 4 and Figures 6 (a) and (b) may have a circular cross-sectional shape. Other shapes are also possible for the tubular capillaries, like elliptical or polygonal cross-sections. Additionally, the solid material of the tubular capillaries of the examples of Figure 4 and Figures 6 (a) and (b) may comprise plastic material, like PMA, glass, like silica, or soft glass.

Figure 5 depicts a radiation source assembly RDS for providing broadband output radiation. The radiation source assembly RDS comprises a pulsed pump radiation source PRS or any other type of source that is capable of generating short pulses of a desired length and energy level; an optical fiber OF (for example of the type shown in Figure 4) with a hollow core COR; and a working medium WM (for example a gas) disposed within the hollow core COR. Although in Figure 5 the radiation source assembly RDS comprises the optical fiber OF shown in Figure 4, in alternative embodiments other types of hollow core optical fiber may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source assembly RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 5 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulation instability (MI), soliton self-compression, soliton fission, Kerr effect, Raman effect and dispersive wave generation, details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core COR.

In order to achieve frequency broadening high intensity radiation may be desirable. An advantage of having a hollow core optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core optical fiber OF may be that the majority of the radiation guided inside the optical fiber OF is confined to the hollow core COR. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 0.1 $\mu$J to 100 $\mu$J, for example 1 - 10 $\mu$J. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulse pump radiation source PRS parameters may include one or more of: pump wavelength, pump pulse energy, pump pulse width, pump pulse repetition rate. Said optical fiber OF parameters may include one or more of: optical fiber length, size and shape of the hollow core 101, size and shape of the capillaries, thickness of the walls of the capillaries surrounding the hollow core. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

Metrology tools MT, and/or lithography apparatuses LA, may experience mechanical vibrations (e.g. of the substrate support WT) that may lead to degradation of the accuracy and/or precision of such tools and apparatuses. For example, it may be necessary for the substrate support WT to move so that different target portions of a substrate W can be illuminated. This motion of the substrate support WT may cause undesired vibrations. Other sources of (e.g. random) vibrations may also be present.

In a particular example, a metrology tool MT may be configured to perform metrology measurements by digital holography (described in more detail in Messinis et al., "Diffraction-based overlay metrology using angular-multiplexed acquisition of dark-field digital holograms," Opt. Express 28, 37419-37435 (2020), the contents of which is hereby incorporated by reference). Briefly, a metrology signal is generated by illuminating a target (e.g. on a substrate W) by two beams, referred to as object beams. It will be appreciated that the object beams may be provided by a broadband radiation source assembly as described herein. Light scattered into +1st (from one object beam) and - 1st (from the other object beam) grating orders of this system is projected onto a camera, together with two reference beams. These reference beams are carefully matched to the two illumination paths, such that the total interference pattern forms a hologram that encodes information from both illumination directions. The interference pattern comprises fringes. Computational processing of the fringes, including the amplitude of the fringes, reveals high-quality information about the target.

Figure 7(a) schematically illustrates the effect of random vibrations on the interference fringes 70. The vibrations cause the fringes 70 to shift back and forth, which results in a loss of contrast between the fringes 70. In addition, when the fringes are integrated over time by the detector (e.g. camera), as shown in Figure 7(b), the fringe amplitude 71 is reduced as a result of the vibrations. Both the loss of contrast and the reduction in fringe amplitude 71 can introduce errors into the metrology measurement.

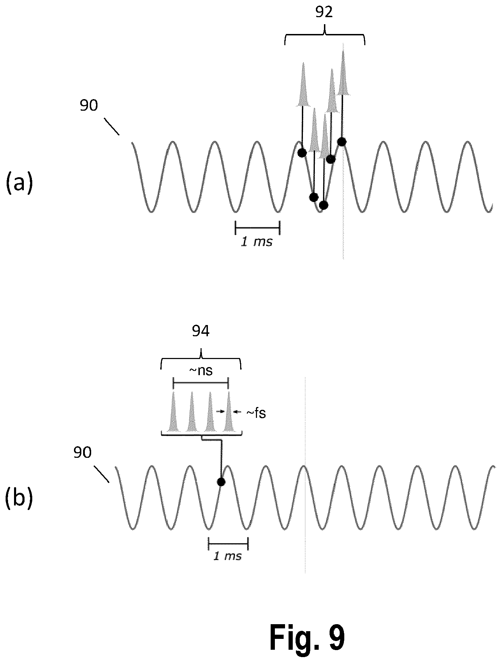

Figure 8(a) schematically illustrates an example of a scheme for a sequence of pulses generated by a pulsed radiation source. In the example illustrated in Figure 8(a), pulses having a duration of ~ fs (e.g. 100s of fs) are regularly spaced in time by a dark period (in which no pulses are emitted) of the order of microseconds. Illuminating a target vibrating at typical vibration frequencies of ~100 Hz to ~1 kHz (giving a vibration time period of ~ 1ms) using regularly spaced pulses as shown in Figure 8(a) would result in the full vibration period being sampled. This is illustrated in Figure 9(a), in which the timings of a plurality of radiation pulses 92, regularly spaced in time on the order of microseconds, are shown with respect to vibrations 90 having a period of ~ 1ms. Integrating the illumination over several pulses 92 to achieve the necessary signal to provide the measurement would therefore introduce the vibration-induced errors described above.

It would therefore be desirable to expose the detector (camera) for significantly less time than a time period of the vibrations. For example, in the case of typical vibration frequencies of ~100 Hz to ~1 kHz (giving a vibration time period of ~ 1ms), a radiation source assembly illuminating the target with only a single pulse providing enough energy for a single exposure of sufficient signal (e.g. 100s of mJ) over a duration of ~ fs or ~ ps could be used, and laser systems suitable for operation on such time scales are available. However, the peak powers of such pulses would be too high for many of the nonlinear processes described herein for the required broadband radiation generation. In addition, the high peak powers may cause damage to optical elements including the optical fiber described herein.

According to the present disclosure, therefore, it is proposed to operate the pump laser source in a mode wherein the pump laser source is configured to output a burst of radiation pulses.

As shown in Figure 8(b), multiple pulses can be compressed into a "burst" of pulses having a total duration of e.g. nanoseconds. This can enable sufficient energy to be delivered to the target to provide enough signal for the measurement, while also keeping the average power low enough that stable broadband radiation generation can take place. Figure 9(b) illustrates the relative time scale of a ~ ns burst 94 of radiation pulses compared to the vibrations 90. For example, a burst 94 having a total duration of a few hundred (e.g. 200) ns or less may be short enough to be effectively instantaneous relative to the vibrations 90. In this way, using a broadband radiation source assembly, where the pump laser source operates in a burst mode, according to the present disclosure may be considered as analogous to a flash photograph.

As an example, digital holography measurements produced using a broadband radiation source assembly pumped by a standard pulse laser (e.g. producing pulses as illustrated in Figure 8(a)), may require spectral power densities as high as 20-50 mW nm$^{-1}$ for an exposure time of 5 ms (where a fundamental mode of a single mode photonic crystal fiber is assumed to be imaged to a ~60 $\mu$m diameter spot). To avoid the loss of fringe visibility due to mechanical vibrations as described above, it is anticipated that the exposure time should be reduced by at least 25 times (e.g. to a maximum exposure time of ~ 200 $\mu$s). For a fixed detector sensitivity, this would require a spectral power density for a fixed repetition rate to be increased 25 times, reaching > 500 mW nm$^{-1}$. In contrast, the broadband radiation source assembly according to the present disclosure can deliver a similar number of required photons to the regularly pulsed source (e.g. having a spectral power density of at least 20 mW nm$^{-1}$) over a much shorter time.

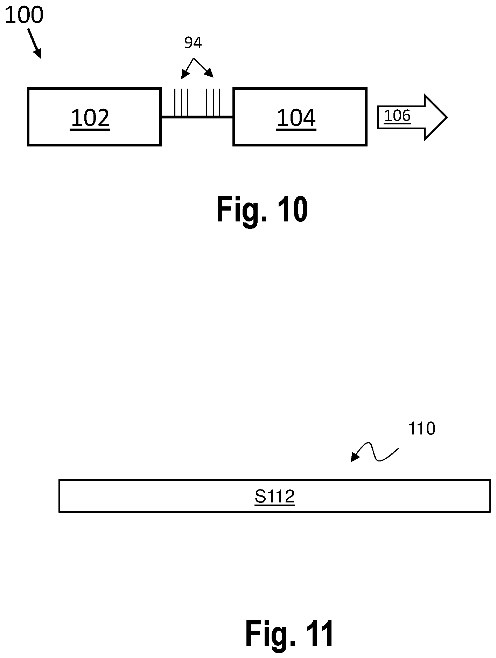

Figure 10 schematically illustrates an example of a broadband radiation source assembly 100 according to the present disclosure. The broadband radiation source assembly 100 comprises a pump laser source 102. As described herein, the pump laser source may comprise one or more lasers. The pump laser source 102 is configured to output (one or more) burst(s) of radiation pulses 94. The broadband radiation source assembly 100 may be suitable for use as a radiation source for a metrology tool MT as described herein. For example the radiation source assembly 100 illustrated in Figure 10 may correspond to the radiation source assembly RDS illustrated in Figure 5. For example, the pump laser source 102 may correspond to the pulsed pump radiation source PRS illustrated in Figure 5. The broadband radiation source assembly 100 further comprises an optical medium 104 configured to generate broadband radiation 106 from the radiation pulses via a nonlinear process. As described herein, the optical medium 104 may be disposed in an optical fiber, for example the optical medium 104 may correspond to the working medium WM in the hollow core HC of the optical fiber OF illustrated in Figure 5 and described herein. In some examples, the optical medium 104 may correspond to the working medium WM without an optical fiber OF. In some examples, the optical medium 104 may comprise a solid core of an optical fiber, or a photonic crystal.

Figure 11 schematically illustrates an example of a method 110 according to the present disclosure. The method 110 comprises a step S112 comprising providing, to an optical fiber comprising an optical medium, a burst of radiation pulses, wherein the optical medium is configured to generate broadband radiation from the radiation pulses via a nonlinear process. It will be understood that the optical medium may correspond to the optical medium 104 illustrated in Figure 10. As described herein, the radiation pulses may be delivered over a burst duration of 1 to 200 ns.

In some examples, the pump laser source may generate a burst of radiation pulses by operating in a "burst-in-burst" mode. A femtosecond laser usually operates in a constant repetition rate ($f_{RR}$) mode where pulses are delivered in time with a constant timing in between them ( $\tau = f_{RR}^{-1}$ ). With the burst-in-burst mode feature it is possible to break up a single pulse in a burst of nanosecond pulses, giving an intra burst repetition rate that is greater than the $f_{RR}$ by e.g. 100x, , e.g. 1 MHz to ~100 MHz within a short time. Each nanosecond pulse can also be broken into a train of picosecond pulses, increasing the intra burst repetition rate to GHz level within a very short time, i.e. a burst within a burst. It is also possible to tune the amplitude of each of these individual pulses, for example such that the amplitude of the pulses within a burst decreases linearly over the burst. It will be understood that any two given bursts are separated by a dark time, or temporal delay, during which no pulses are emitted by the pump laser source. For example, the dark time may be, e.g., 10-100 $\mu$s, equivalent to a repetition rate of the bursts of radiation pulses (i.e. an inter burst repetition rate) of 10-100 kHz.

A comparison of different "burst" modes of the laser is shown in the table below, in which an individual pulse

energy of 10 $\mu$J was achieved in each case. The laser source operates at a centre wavelength of 1030 nm.

| Pump laser parameters | Average laser power | Repetition rate | Single pulse energy | Amount of pulses in nanosecond burst (N) | Nanosecond burst individual pulse energy | Amount of pulses in picosecond burst (P) | Picosecond burst individual pulse energy | Total amount of pulses (N x P) | Total duration of the burst |
|---|---|---|---|---|---|---|---|---|---|
| Single pulse mode | 10 W | 1 MHz | 10 µJ | - | - | - | - | 1 | 200 fs |
| Nanosecond burst mode | 10 W | 100 kHz | 100 µJ | N = 10 | 10 µJ | - | - | 10 | 150 ns |
| Picosecond burst mode | 10 W | 100 kHz | 100 µJ | N = 1 | 100 µJ | P = 10 | 10 µJ | 10 | 4 ns |
| Picosecond burst in nanosecond burst mode | 10 W | 10 kHz | 1 mJ | N = 10 | 100 µJ | P = 10 | 10 µJ | 100 | 150 ns |

13

The advantage of the burst mode is illustrated when comparing the single pulse mode versus the burst-in-burst mode. Both modes create a supercontinuum output with a power density of 20 mW mri'. The burst-in-burst mode delivers 100 pulses in 150 ns. The single pulse mode has a repetition rate of 1 MHz, therefore it delivers 100 pulses equally spaced in 100 $\mu$s. The burst-in-burst has a repetition rate of 10 kHz, hence the burst occurs every 100 $\mu$s. But the pulses are compressed into a 150 ns timeframe, which is followed by 99.85 $\mu$s of 'darkness'.

By delivering all the light in a single burst, or flash, of pulses the mechanical vibrations of the metrology tool MT are "frozen" in time.

Furthermore, the long dark time between bursts will allow relaxation of plasma heating effects and molecular excitation and heating, processes which currently limit the maximum repetition rate, and hence spectral power of some broadband radiation source assemblies. Thus, this approach may also enable an additional increase in spectral power density.

In some examples, the pump laser source is configured to operate in a burst or burst-in-burst mode with pulses of constant amplitude.

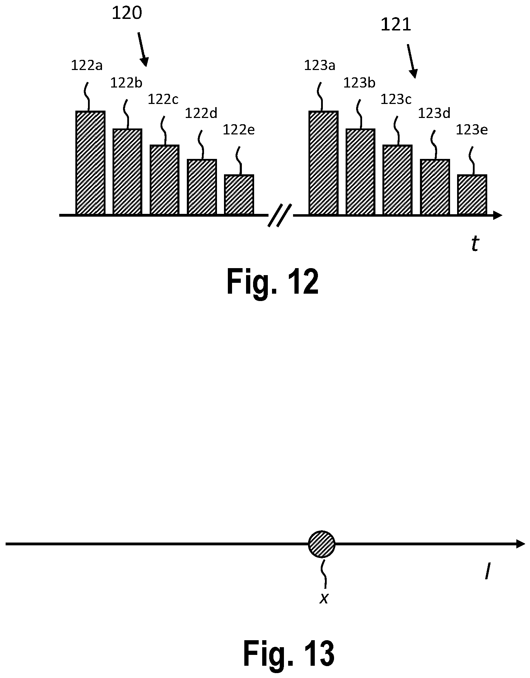

In some examples, the amplitude of the laser pulses are adjusted to decrease gradually. In this way the first leading pulse may start e.g. a Raman process, while the subsequent pulses are scattered off the existing nonlinear polarization created in the system. This reduces the required pulse energy in the subsequent pulses and may contribute to a reduction in the thermal load in the system. For example, Figure 12 schematically illustrates a first burst 120 comprising five pulses 122a-e outputted by a pump laser source sequentially over time, t. The amplitude of each subsequent pulse in the first burst 120 is lower than the amplitude of the previous pulse (e.g. the amplitude of the second pulse 122b in the first burst 120 is lower than the amplitude of the first pulse 122a in the first burst 120, the amplitude of the third pulse 122c in the first burst 120 is lower than the amplitude of the second pulse 122b in the first burst 120, and so on). In other words, the pulse amplitude of the radiation pulses 122a-e decreases monotonically with each pulse 122a-e within a burst 120, 121. In some examples, the pulse amplitude of the radiation pulses 122a-e decreases linearly with each pulse 122a-e within a burst 120, 121. As further illustrated in Figure 12, a second burst 121 repeats the pattern of the first burst 120, that is the a pulse 123a within the second burst 121 has a maximum amplitude of the pulses 123a-e within the second burst 121 (e.g. the same or substantially the same as the amplitude of the first pulse 122a of the first burst 120), and the amplitude of the second pulse 123b in the second burst 121 is lower than the amplitude of the first pulse 123a in the second burst 121, the amplitude of the third pulse 123c in the second burst 121 is lower than the amplitude of the second pulse 123b in the second burst 121, and so on. The pattern is repeated for all of the bursts outputted by the pump laser source. It will be understood that, in some examples, the pulse amplitude of the radiation pulses within a pulse may decrease non-monotonically.

While the above description relates mainly to digital holography measurements, it will be understood that other metrology systems and methods may also benefit from a reduced susceptibility to mechanical vibrations.

It is important that the broadband radiation source assembly is operated under conditions that do not impair the stability and relative intensity noise (RIN) of the target emission wavelength(s). Experimental investigations by the inventors into the parameters affecting the stability and RIN will now be described. While these investigations were based mainly on four-wave mixing in a hollow-core fiber filed with Ar and He, it is envisaged that similar triggers for instability would be observable for other pumping schemes such as high-harmonic generation and ultrabroad continuum.

Pumping schemes including soliton self-compression and modulation instability were investigated. It was found that photoionisation of the atomic gas triggers complex post-recombination dynamics of the gas back to its neutral state. Without wishing to be bound by theory, the relaxation of the energy stored in the ionised gas and electron plasma may be caused by the excitation of acoustic and pressure waves that can modulate the gas refractive index and guidance of the fiber. More exotic excitation may be triggered in bulk state material or at the boundaries between different materials. Moreover, gas excitation can lead to catastrophic temperature increases and acoustic excitation of the glass fiber microstructure. The gas heating can be moderated by using buffer gas mixtures with high thermal conductivity and low nonlinear coefficient, such as helium.

Without wishing to be bound by theory, it may be the case that any intensity-dependent photo-excitation of the nonlinear medium, e.g., photoionisation of light noble gases or excitation of out-of-equilibrium molecular states in light molecular gases, leads to a complex relaxation process with several time scales involved that can hamper the stability of the light source, heat the gas, or even lead to catastrophic damage of the whole fiber.

Therefore, it may be desired, for a given broadband radiation source assembly according to the present disclosure, to adjust the pump laser source parameters for a given optical medium to avoid any photoexcitation of the optical medium.

Referring to Figure 13, there may exist a total energy, E, of the burst of radiation pulses delivered to the optical medium by the pump laser source above which the broadband radiation generation by the broadband radiation source assembly described herein becomes unstable. It will be understood that the energy, *E*, of the radiation produced by the pump laser source is at least partly related to the intensity, peak power, inter burst repetition rate, intra burst repetition rate, and/or wavelength of the burst(s) of radiation pulses. This energy (also referred to as a threshold energy) is marked schematically by the circle labelled *x* in Figure 13. That is, at energies, *E*, above *x*, the operation of the broadband radiation source assembly may become unstable due to photoionisation and/or photoexcitation of the optical medium.

A region of stable operation with a threshold energy, *x*, above which photoionization and photoexcitation of the neutral gas occurs can be identified. It will be appreciated that the photoexcitation and/or photoionisation of the optical medium depends on several parameters, including the excitation wavelength. This threshold can be estimated for different laser conditions and different optical media, including gas-filled hollow core fiber configurations.

In some examples, "stable operation" may be defined as a case wherein the input and output energy stability and RIN are comparable by a small factor (e.g. a factor of 2). For example, any noise in the generated broadband radiation may be comparable to the noise of the pump laser source. The inventors found an operation regime that limits the effects of any gas photoexcitation while maintaining the nonlinear property of the light source to generate light in different bands. (For example, for a four-wave mixing-based light source, the efficiency of generating an idler wavelength and amplifying the signal is only slightly reduced compared to the case that leads to photoionisation of the gas for higher pump-seed intensities).

To quantify this stable operation regime in the experimental demonstration, the inventors used a pump and seed laser with a RIN of ~ 1% and considered as a threshold for stable operation a RIN of <2% at the output of the optical fiber. Different thresholds between input and output RIN or energy stability could be used depending on the sensitivity of the target application.

In the stable operation region (i.e. for pump radiation energies below x) the generated broadband radiation is stable over time within a single burst and among different bursts. The inventors did not observe any degradation of the RIN or any nonlinear absorption in the gas-filled hollow core fiber. The absence of nonlinear absorption due to photoexcitation of the optical medium (gas) could be used to identify this regime of operation by measuring the transmission of the radiation pulses by the optical medium as a function of the energy/intensity of the radiation pulses outputted by the pump laser source.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A broadband radiation source assembly comprising:

   a pump laser source configured to output a burst of radiation pulses; and
   an optical fiber comprising an optical medium configured to generate broadband radiation from the radiation pulses via a nonlinear process;
   wherein each burst comprises a plurality of radiation pulses delivered over a burst duration of 1 to 200 ns.

2. A broadband radiation source assembly according to claim 1, wherein each burst comprises 2 to 100 radiation pulses, optionally wherein each burst comprises 2 to 10 radiation pulses.

3. A broadband radiation source assembly according to claim 1 or 2, wherein the burst duration is 1 to 150 ns, optionally wherein the burst duration is 1 to 100 ns, further optionally wherein the burst duration is 1 to 10 ns.

4. A broadband radiation source assembly according to any one of the preceding claims, wherein a repetition rate of the bursts of radiation pulses is 10 to 100 kHz.

5. A broadband radiation source assembly according to any one of the preceding claims, wherein the broadband radiation has a spectral power density of at least 20 mW nm$^{-1}$.

6. A broadband radiation source assembly according to any one of the preceding claims, wherein the optical fiber is a solid core optical fiber.

7. A broadband radiation source assembly according to any one of claims 1 to 5, wherein the optical fiber is a hollow core optical fiber, and wherein the optical medium comprises a gas filling the hollow core optical fiber.

8. A broadband radiation source assembly according to claim 7, wherein the gas comprises a molecular gas, optionally wherein the molecular gas comprises one of more of $H_2$, $D_2$, $N_2$, $CH_4$, and $SF_6$.

9. A broadband radiation source assembly according to claim 7 or 8, wherein the gas comprises an atomic gas, optionally wherein the atomic gas comprises one or more of Ar, Kr, Xe, Ne, and He.

10. A broadband radiation source assembly according to any one of the preceding claims, wherein the pump laser source is configured such that a pulse amplitude of radiation pulses in a burst decreases with each pulse within a burst.

11. A broadband radiation source assembly according to any one of the preceding claims, wherein a total energy in a burst provided to the optical medium by the pump laser source is below an energy at which photoexcitation and/or photoionisation of the optical medium occurs.

12. A broadband radiation source assembly according to any one of the preceding claims, wherein the pump laser source is configured to operate in:

   a first operational mode in which the pump laser source is configured to output radiation pulses at a fixed repetition rate and a given pulse energy; and
   a second operational mode in which the pump laser source is configured to output a burst of radiation pulses.

13. A broadband radiation source assembly according to claim 12, wherein a burst duration in the second operational mode is shorter than a time interval between consecutive pulses in the first operational mode, optionally wherein the burst duration in the second operational mode is shorter than a time interval between consecutive pulses in the first operational mode by 50% or less.

14. A metrology tool comprising a broadband radiation source assembly according to any one of the preceding claims.

15. A method of generating broadband radiation, the method comprising:

   providing, to an optical fiber comprising an optical medium, a burst of radiation pulses, wherein the optical medium is configured to generate broadband radiation from the radiation pulses via a nonlinear process;
   wherein each burst comprises a plurality of radiation pulses delivered over a burst duration of 1 to 200 ns.

**Fig. 1**

Fig. 2

Fig. 3

Fig. 4

Fig. 5

(a)    (b)

**Fig. 6**

(a)    (b)

**Fig. 7**

(a)

(b)

**Fig. 8**

Fig. 9

100

94

| 102 | | 104 | 106 → |

**Fig. 10**

110

| S112 |

**Fig. 11**

120

121

122a

122b

122c

122d

122e

123a

123b

123c

123d

123e

//

*t*

**Fig. 12**

*l*

*x*

**Fig. 13**

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/023430 A1 (ANDERSEN THOMAS VESTERGAARD [DK]) 26 January 2023 (2023-01-26) * paragraphs [0022], [0023]; figure 5 * * paragraph [0074] * * paragraphs [0076] - [0078] * ----- | 1-15 | INV. G02F1/35 G02F1/365 |
| X | US 2021/364885 A1 (BAUERSCHMIDT SEBASTIAN THOMAS [DE] ET AL) 25 November 2021 (2021-11-25) * paragraph [0108] * * paragraph [0087] * * figure 9 * ----- | 1-15 | |
| A | US 2022/011500 A1 (ABDOLVAND AMIR [NL] ET AL) 13 January 2022 (2022-01-13) * paragraph [0070] * ----- | 8,9 | |

**TECHNICAL FIELDS SEARCHED (IPC)**

G02F

The present search report has been drawn up for all claims

| Place of search | Date of completion of the search | Examiner |
|---|---|---|
| The Hague | 7 October 2024 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6275

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | Publication date | Patent family member(s) | | Publication date |
|---|---|---|---|---|
| US 2023023430 A1 | 26-01-2023 | EP | 4078284 A1 | 26-10-2022 |
| | | JP | 2023506296 A | 15-02-2023 |
| | | US | 2023023430 A1 | 26-01-2023 |
| | | WO | 2021121530 A1 | 24-06-2021 |
| US 2021364885 A1 | 25-11-2021 | CN | 115668050 A | 31-01-2023 |
| | | DK | 3913430 T3 | 21-11-2022 |
| | | EP | 3913429 A1 | 24-11-2021 |
| | | EP | 3913430 A1 | 24-11-2021 |
| | | IL | 297491 A | 01-12-2022 |
| | | KR | 20230004745 A | 06-01-2023 |
| | | TW | 202209004 A | 01-03-2022 |
| | | US | 2021364885 A1 | 25-11-2021 |
| | | US | 2024061314 A1 | 22-02-2024 |
| | | WO | 2021233626 A1 | 25-11-2021 |
| US 2022011500 A1 | 13-01-2022 | CN | 115769140 A | 07-03-2023 |
| | | DK | 3936937 T3 | 19-09-2022 |
| | | EP | 3936937 A1 | 12-01-2022 |
| | | IL | 299122 A | 01-02-2023 |
| | | JP | 7493063 B2 | 30-05-2024 |
| | | JP | 2023533186 A | 02-08-2023 |
| | | KR | 20230019967 A | 09-02-2023 |
| | | TW | 202206948 A | 16-02-2022 |
| | | US | 2022011500 A1 | 13-01-2022 |
| | | US | 2023333314 A1 | 19-10-2023 |
| | | WO | 2022008164 A1 | 13-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006066855 A1
- US 2011102753 A1
- US 20120044470 A
- US 6952253 B
- US 2004015085 A1
- WO 2017032454 A
- WO 2017032454 A1
- WO 2018127266 A1
- US 9160137 B1

### Non-patent literature cited in the description

- **MESSINIS et al.** Diffraction-based overlay metrology using angular-multiplexed acquisition of dark-field digital holograms. *Opt. Express*, 2020, vol. 28, 37419-37435